# EUROPEAN PATENT APPLICATION

(11) **EP 1 500 536 A1**
(43) Date of publication of application: **26.01.2005**
(21) Application number: 04017549.9
(22) Date of filing: 23.07.2004
(51) Int. Cl.: B60H 1/32, F01P 7/04

(54) **Control apparatus and control method of vehicle cooling fan**

(30) Priority: 24.07.2003 JP 2003279182
(71) Applicant: Calsonic Kansei Corporation, Tokyo 164-8602 (JP)
(72) Inventor: Yamazaki, Takashi Calsonic Kansei Corporation, Tokyo 164-8602 (JP)
(74) Representative: Grünecker, Kinkeldey, Stockmair & Schwanhäusser Anwaltssozietät

(57) **Abstract**

A controller 41 of a cooling fan 11 cools a radiator 4 of a vehicle driving system cooling water and a condenser 3 incorporated in a refrigeration cycle of a vehicle air conditioning system. When a high-pressure side refrigerant pressure of the refrigeration cycle is equal to or higher than a predetermined value P1, the controller 41 drives the cooling fan 11 irrespective of operation/non-operation state of the vehicle air conditioning system 1.

## Description

### BACKGROUND OF THE INVENTION

### 1. Field of the Invention

The present invention relates to a control apparatus and a control method of a vehicle cooling fan which cools an integral-type heat exchanger which integrally comprises a radiator of a vehicle driving system cooling water and condenser incorporated in a refrigeration cycle of a vehicle air conditioning system through a heat transfer section.

### 2. Description of the Related Art

The radiator of the vehicle driving system cooling water and the condenser included in the refrigeration cycle are disposed close to each other to simplify the producing procedure, or a heat exchanger in which the radiator and the condenser are integrally formed together through a heat transfer section is used in some cases.

When the radiator and the condenser are disposed close to each other, there exists an influence of thermal radiation in addition to heat transfer, and even if surface ends of tubes are separated from each other by about 30mm, the influence of radiation cannot be eliminated completely, and if they are separated from each other by 20mm, the influence of radiation is only reduced by half. Therefore, when the radiator and the condenser are disposed adjacent to each other or a distance between tubes in the integral-type heat exchanger is set to 10mm or less for saving space, the influence of heat transfer is great. In a vehicle having this kind of heat exchanger, if the vehicle air conditioning system is OFF in a state in which a vehicle driving power source such as an engine is warm, since heat is transferred from the radiator to the condenser, a high-pressure side refrigerant pressure of the refrigeration cycle of the vehicle air conditioning system increases, and the refrigerant pressure reaches the pressure caused when the vehicle air conditioning system is operated in some cases.

If the vehicle air conditioning system is turned ON in this state, the high-pressure side refrigerant pressure is further increased, and a high pressure protecting circuit stops the vehicle air conditioning system in some cases. Also when the vehicle air conditioning system is operated, since the liquid refrigerant in the condenser is heated and vaporized, there is a problem that a large noise is generated in an expansion valve.

### SUMMARY OF THE INVENTION

A problem to be solved by the present invention is that when the vehicle air conditioning system is OFF, heat of the radiator is transferred to the condenser and the pressure of the higher pressure side of the refrigeration cycle is increased.

According to a technical aspect of the present invention, in a controller of a vehicle cooling fan, the cooling fan cools a radiating section of a radiator included in a passage of vehicle driving system cooling water and a radiating section of a condenser included in a refrigerant passage of a vehicle air conditioning system, and in a case where a higher pressure side of the refrigerant passage is equal to or higher than a predetermined value, the cooling fan becomes operative irrespective of operative/inoperative state of the vehicle air conditioning system.

### BRIEF DESCRIPTION OF THE DRAWINGS

Fig. 1 is a schematic block diagram of a vehicle air conditioning system to which the present invention is applied;
Figs. 2A-2C show the entire multifunction-type heat exchanger which can be applied to the vehicle air conditioning system of Fig. 1, wherein Fig. 2A is a front view thereof, Fig. 2B is a top view and Fig. 2C is a side view;
Fig. 3 is a flowchart showing a control procedure of a control apparatus;
Fig. 4 is a flowchart showing the control procedure of the control apparatus;
Fig. 5 is a flowchart showing the control procedure immediately after the vehicle air conditioning system is actuated;
Fig. 6 is a flowchart showing a processing procedure of first processing A1;
Fig. 7 is a flowchart showing a processing procedure of second processing A2;
Fig. 8 is a flowchart showing a processing procedure of third processing A3;
Fig. 9 is a flowchart showing a processing procedure of first processing B1;
Fig. 10 is a flowchart showing a processing procedure of second processing B2;
Fig. 11 is a flowchart showing a processing procedure of third processing B3;
Fig. 12 is an enlarged view of an essential portion showing a distance L between the radiator and the condenser. multifunction-type heat exchanger.
Fig. 13 is a perspective view showing an example of a heat exchanger in which tubes are integrally formed: and
Fig. 14 is a graph showing an influence of heat radiation in a distance from an end edge of a tube of a radiator.

### DESCRIPTION OF THE PREFERRED EMBODIMENTS

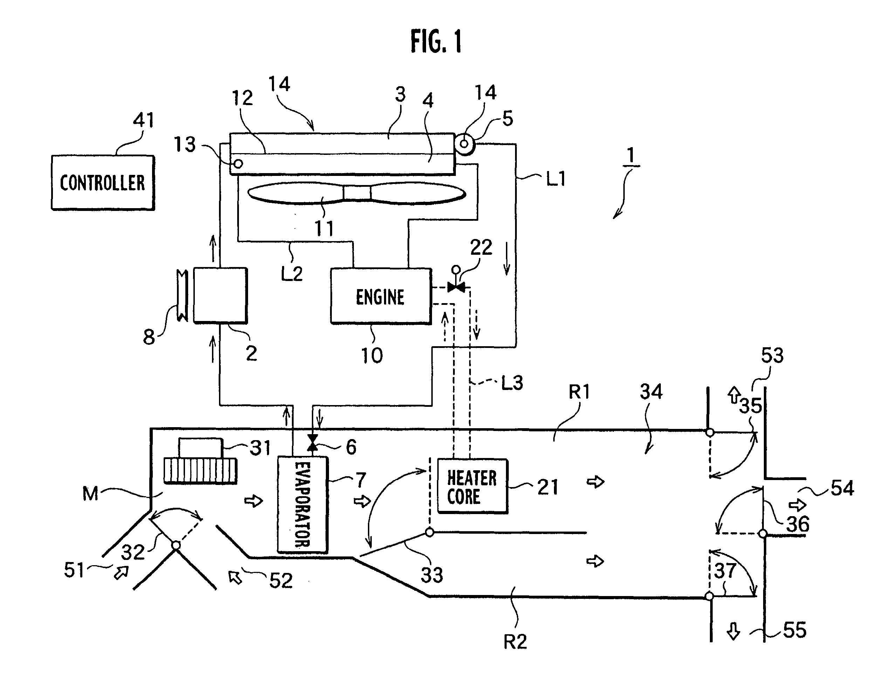

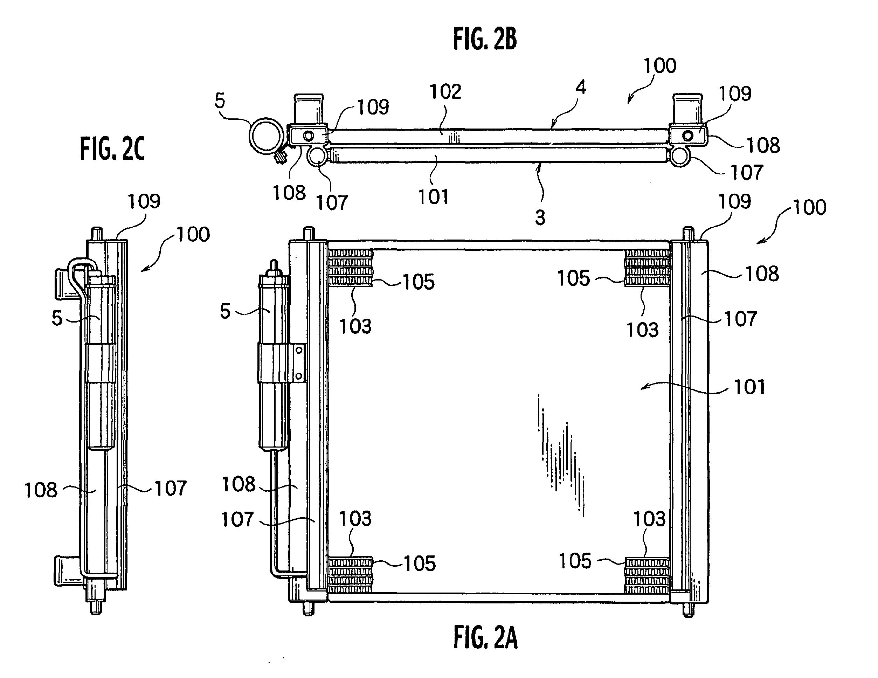

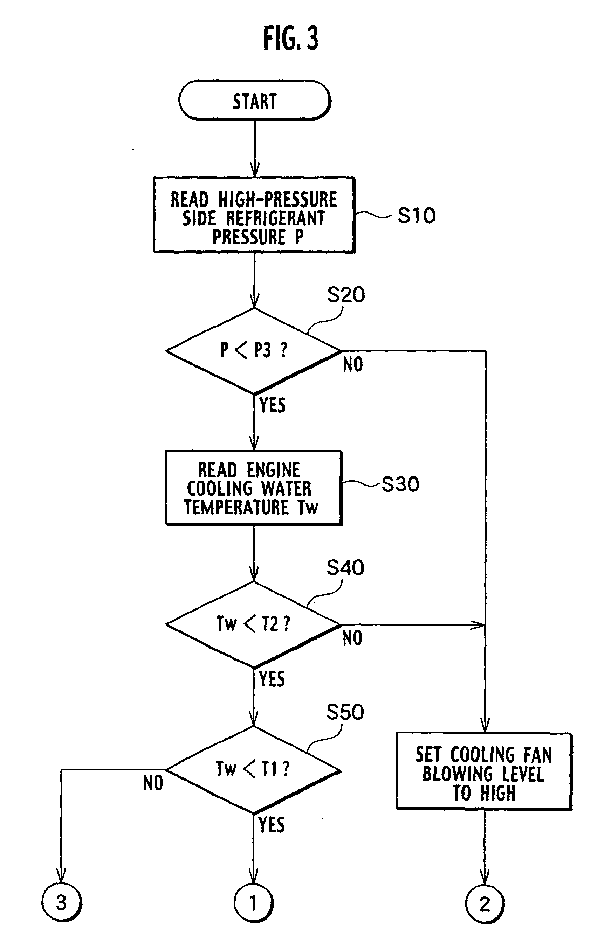

An embodiment of the present invention will be explained based on the drawings. Fig. 1 is a schematic block diagram of a vehicle air conditioning system to which the present invention is applied, and Figs. 2A-2C and 3 are flowcharts showing a control procedure of a control apparatus.

A vehicle air conditioning system 1 shown in Fig. 1 includes a refrigeration cycle which circulates refrigerant to exchange heat between the refrigerant and outside air. In the refrigeration cycle, a compressor 2, a condenser 3, a liquid tank 5, an expansion valve 6 and an evaporator 7 are communicated with one another through pipe members, and the refrigerant to which kinetic energy is given by the compressor 2 circulates therebetween. In other words, a refrigerant passage L1 includes the compressor 2, the condenser 3, the liquid tank 5, the expansion valve 6 and the evaporator 7.

The compressor 2 is disposed outside a passenger room such as an engine room. The compressor 2 compresses sucked low pressure gaseous refrigerant and discharge high pressure gaseous refrigerant. The compressor 2 is driven in such a manner that power of a crankshaft of an engine 10 is transmitted to the compressor 2 through a clutch 8. In the case of a clutohless compressor, although the compressor rotates together with the engine, the angle of the rotation swash plate is changed and the introduced refrigerant is compressed and discharged such that a predetermined capacity is obtained if the vehicle air conditioning system 1 is turned ON.

The condenser 3 is disposed outside the passenger room, and radiates, outside, heat of the high temperature and high pressure gaseous refrigerant discharged from the compressor 2.

A first cooling water passage L2 of the engine 10 includes a radiator 4. The condenser 3 and the radiator 4 are integrally formed together through a heat transfer section 12, and constitute a multifunction-type heat exchanger 100. That is, The refrigerant passage L1 and the radiator 4 included in the cooling water first passage L2 are thermally coupled to each other through the heat transfer section 12. The radiator 4 is provided with a water temperature sensor 13 which detects a water temperature of the engine cooling water.

As shown in Figs. 2A to 2C, in a vehicle heat exchanger 100 as the multifunction- type heat exchanger of the embodiment, two heat exchangers 3 and 4 having different sizes are disposed close to each other. The heat exchangers 3 and 4 are integrally superposed on each other along a direction of wind passing through radiating sections 101 and 102. A larger one of the heat exchangers is the radiator 4 which cools the engine cooling water, and the smaller heat exchanger is the condenser 3 which cools the refrigerant in the vehicle air conditioning system.

The radiator 4 and the condenser 3 of the vehicle heat exchanger 100 of this embodiment includes radiating sections 102 and 101. The radiating sections 102 and 101 respectively include a plurality of tubes 104 and 103, and outer fins 106 and 105 sandwiched between the adjacent tubes 104 and 103. A pair of left and right header pipes 107 and 108 which are vertically disposed are continuously connected to opposite ends of the tubes 103 and 104 which are laminated on one another through the corrugated outer fins 105 and 106, and a flow path through which the engine cooling water and refrigerant flow is formed in the radiating sections 101 and 102.

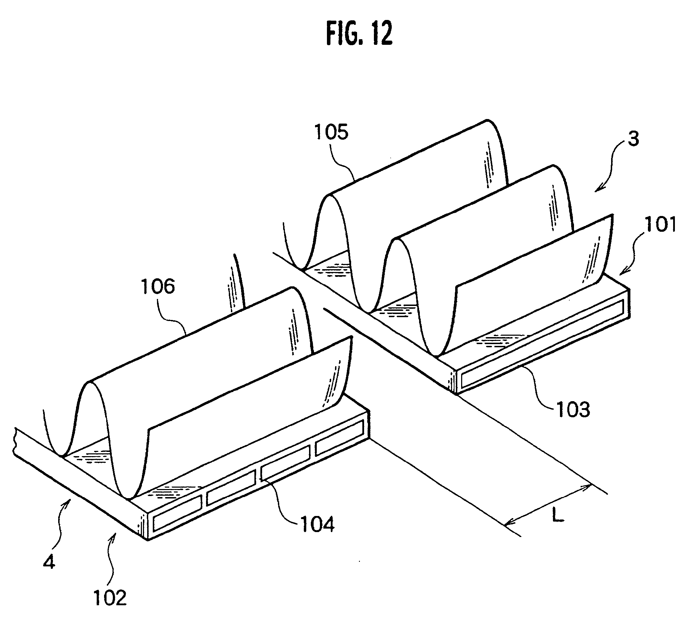

As shown in Fig. 12, the radiator 4 and the condenser 3 are integrally fixed to each other by a patch end 109 which is assembled to ends of the adjacent header pipes 107 and 108 such that the superposed radiator 4 and condenser 3 are held while keeping a predetermined distance L between the opposed tube ends edges of the radiator 4 and the condenser 3.

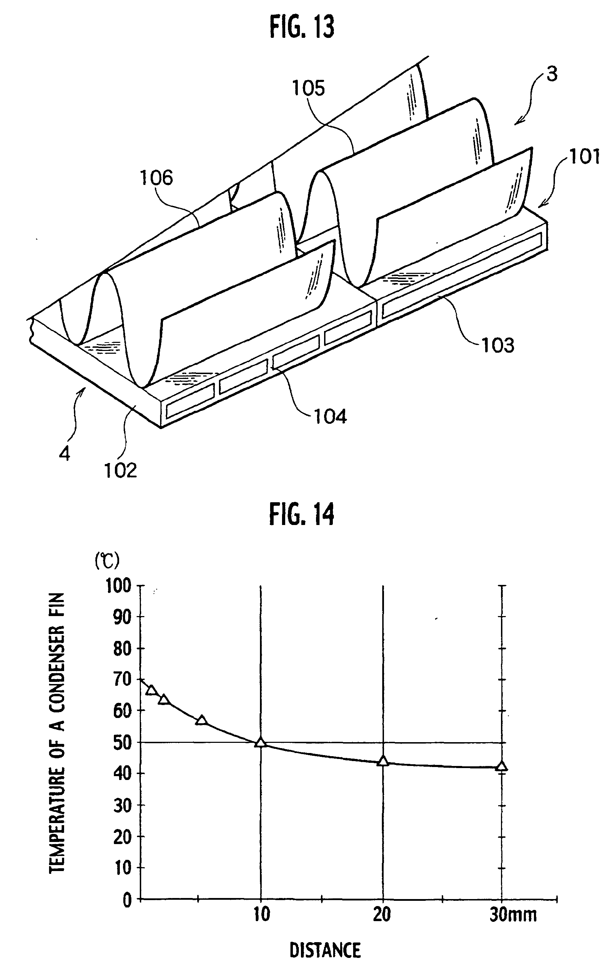

When the radiator 4 and the condenser 3 are integrally formed together through the heat transfer section, the heat transfer section mainly transmits heat. On the other hand, if the radiator 4 and the condenser 3 are disposed close to each other, the radiation heat largely influences in addition to the heat transfer phenomenon. As shown in Fig. 14, if the tube surface ends are separated from each other by 20mm, the radiation heat is reduced by about half, and even if they are separated from each other by about 30mm, the influence of radiation cannot be eliminated completely. Therefore, in this embodiment, the radiator 4 and the condenser 3 are disposed close to each other such that the distance L is in a range from 5 mm to 10mm for saving space.

As the heat transfer section 12 which integrally forms the condenser 3 and the radiator 4 together, Japanese Patent Application Laid-open No. 2002-277180 proposes to use a fin as shown in Fig. 1 thereof, Japanese Patent Application Laid-open No. 2003-42685 proposed to use a side plate as shown in Fig. 2 thereof, and Japanese Patent Application Laid-open No. 2002-81887 proposes to use a tank as shown in Fig. 1 thereof. Further, tubes 103 and 104 constituting the condenser 3 and a radiating section of the radiator 4 may be integrally formed together to realize a heat transfer section as shown in Fig. 13.

When a cooling fan 11 is driven, the cooling fan 11 blows outside air against the condenser 3 and the radiator 4. The condenser 3 exchanges heat between the high temperature and high pressure gaseous refrigerant flowing through the condenser 3 and outside air blowing against the condenser 3, thereby radiating the heat of the high temperature and high pressure gaseous refrigerant to outside.

The heat of the refrigerant is radiated by the condenser 3 to cool the refrigerant and the refrigerant is liquefied. The liquid tank 5 temporarily stores such a refrigerant. The liquid tank 5 is provided with a pressure sensor 14 which detects a pressure of the refrigerant. It is preferable that the pressure sensor is located between the compressor 2 and the expansion valve 6. In order to detect the heat received from the radiator 4 to control more precisely, it is preferable that the liquid tank 5 is provided with the pressure sensor.

The expansion valve 6 abruptly expands the liquid refrigerant whose heat was radiated by the condenser 3 and which is temporarily stored in the liquid tank 5, thereby supplying the atomized refrigerant at low temperature and at low pressure to the evaporator 7.

The evaporator 7 is disposed upstream in an air passage M in the passenger room. The evaporator 7 allows the low temperature and low pressure atomized refrigerant from the expansion valve 6 to absorb the heat of air flowing through the air passage M in the passenger room.

The atomized refrigerant became lower in temperature and lower in pressure during passing through the expansion valve 6 and the atomized refrigerant being supplied to the evaporator 7, and absorbs heat of air flowing in the air passage M of the passenger room and is vaporized when the refrigerant passes through the evaporator 7. This gaseous refrigerant is sucked into the compressor 2, and is again compressed and discharged out. On the other hand, the air whose heat is absorbed by the refrigerant in the evaporator 7 is dehumidified and becomes cool air and flows toward the downstream of the air passage M in the passenger room.

The refrigeration cycle allows the refrigerant to circulate in the above manner, exchanges heat in the condenser 3 and the evaporator 7, thereby generating the cool air in the air passage M in the passenger room.

The vehicle air conditioning system includes a hot water line (second passage of cooling water) L3. The hot water line allows the engine cooling water which was heated by exhaust heat of the engine 10 to circulate to exchange heat between the engine cooling water and the air. The hot water line includes a heater core 21. The heater core 21 is disposed downstream of the evaporator 7 in the air passage M in the passenger room. The heater core 21 radiates heat of the engine cooling water into the air passage M using, as a heat medium, the cooling water supplied from the water jacket of the engine 10 through a pipe member, i.e., the engine cooling water which was heated by the exhaust heat of the engine. The air flowing in the air passage M in the passenger room absorbs heat from the heater core 21, and hot air is generated in the air passage M in the passenger room. The pipe member which supplies the engine cooling water from the water jacket of the engine 10 to the heater core 21 is provided with a water valve 22. The opening and closing operation of the water valve 22 is adjusted by a later-described controller 41, and the flow rate of the engine cooling water to be supplied to the heater core 21 in the second passage L3, i.e., the radiation amount of the heater core 21 is adjusted. That is, the heat can be exchanged between the second passage L3 and the air passage M in the passenger room through the heater core 21.

A blower fan 31 is disposed upstream of the air passage M in the passenger room. If the blower fan 31 is driven, the outside air is introduced into the air passage M in the passenger room from an outside air introducing opening 51 or inside air is introduced into the air passage M in the passenger room from an inside air introducing opening 52. An intake door 32 is provided in the vicinity of the outside air introducing opening 51 and the inside air introducing opening 52. If the intake door 32 is driven and controlled, a ratio of the outside air and the inside air to be introduced into the air passage M in the passenger room is adjusted.

The air introduced into the air passage M in the passenger room from the outside air introducing opening 51 or the inside air introducing opening 52 first passes through the evaporator 7 disposed upstream of the air passage M in the passenger room. At that time, the heat of the air which passed through the evaporator 7 is absorbed by the refrigerant in the evaporator 7, the air is cooled and dehumidified and becomes cool air and flows toward the downstream.

In the air passage M in the passenger room, a downstream portion of the evaporator 7 is branched into a hot air passage R1 and a bypass passage R2. The heater core 21 is disposed in the hot air passage R1. The bypass passage R2 bypasses the heater core 21. As described above, when the air which flowed into the hot air passage R1 passes through the heater core 21, the air absorbs the heat from the heater core 21 and becomes hot air and flows toward the downstream. On the other hand, air which flowed into the bypass passage R2 is cooled by the refrigerant in the evaporator 7 and flows toward the downstream in this cold state.

The branch point at which the hot air passage R1 and the bypass passage R2 are branched is provided with an air mixing door 33 which adjusts the ratio of a flow rate of air flowing toward the hot air passage R1 and a flow rate of air flowing toward the bypass passage R2. This air mixing door 33 is driven and controlled and the ratio of the flow rate of air flowing toward the hot air passage R1 and the flow rate of air flowing toward the bypass passage R2, thereby finally adjusting the temperature of air to be sent out from a defroster outlet 53, a vent outlet 54 and a foot outlet 55.

A portion of the air passage M in the passenger room downstream of the hot air passage R1 and the bypass passage R2 is provide with an air mixing chamber 34 which mixes the hot air from the hot air passage R1 and the cold air from the bypass passage R2. The air mixing chamber 34 is provided with the defroster outlet 53, the vent outlet 54 and the foot outlet 55. The defroster outlet 53 blows air against a windshield, and the vent outlet 54 blows the air toward an upper-body of the passenger, and the foot outlet 55 blows the air toward the feet of the passenger. A defroster door 35, a vent door 36 and a foot door 37 are respectively provided in the vicinity of the outlets 53 to 55. By driving and controlling these doors, the flow rate of air sent from each outlet is adjusted.

In the vehicle air conditioning system 1, air passing through the evaporator 7 and is dehumidified is heated by the heater core 21 to generate the hot air. Therefore, it is also possible to dehumidify at the time of warming operation.

The controller 41 shown in Fig. 1 controls the entire vehicle air conditioning system 1. Values detected by the water temperature sensor 13 and the pressure sensor 14 are inputted into the controller 41, and based on the detected values, the driving operation of the cooling fan 11 is controlled.

According to the present invention, when the vehicle is idling and the vehicle air conditioning system 1 is OFF, the heat of the heated engine cooling water is transmitted to the condenser 3 through the heat transfer section 12, and the pressure P of the higher pressure portion in the refrigeration cycle (hereafter the high-pressure side refrigerant pressure) is increased. If the refrigerant pressure P exceeds a predetermined value P1 (0.97MPa in this embodiment), the controller 41 drives the cooling fan 11. In this embodiment, when the vehicle speed is equal to or higher than a predetermined value V0 (50km/h in this embodiment), the cooling fan 11 is inoperative irrespective of operation state of the vehicle air conditioning system 1.

### Control procedure of cooling fan

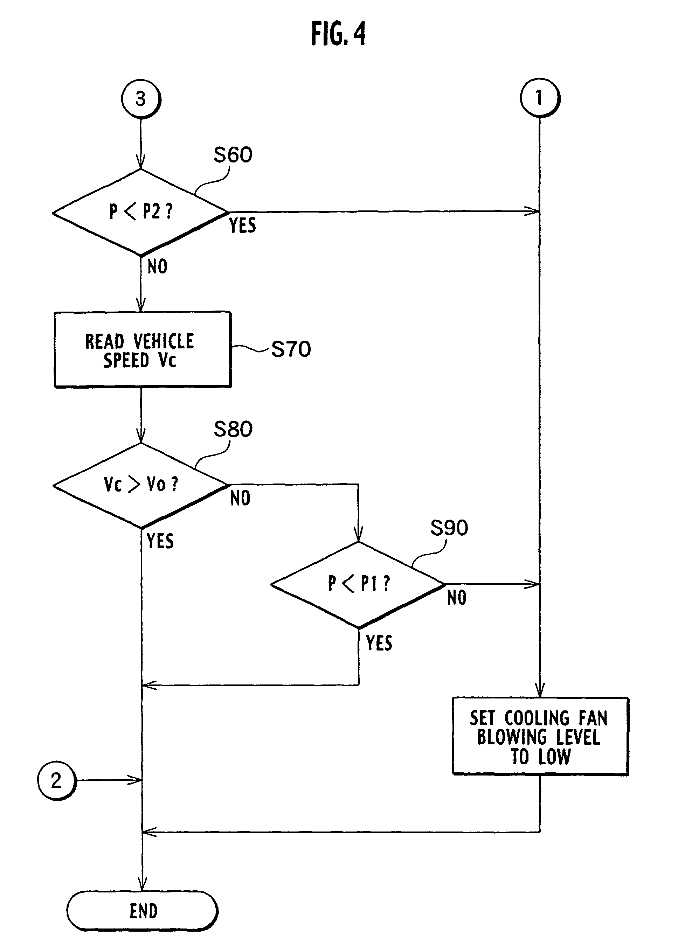

In this embodiment, a blowing level of the cooling fan 11 is controlled in some stages in accordance with the level of the refrigerant pressure P. The control procedure will be explained in detail based on Figs. 3 and 4.

First, a value of the pressure sensor 14, i.e., the high-pressure side refrigerant pressure P is read (step S10), and it is determined whether P is smaller than a predetermined value P3 (1.57MPa in this embodiment) which is greater than P1 (step S20).

In a case of YES, a value of the water temperature sensor 13, i . e . , the engine cooling water temperature Tw is read (step S30), and it is determined whether Tw is smaller than a predetermined value T2 (100?C in this embodiment) (step S40). If NO in step S20 or NO in step S40, the cooling fan 11 is driven at a predetermined blowing level High (high blowing level).

In a case of YES in step S40, it is determined whether the cooling water temperature Tw is smaller than a predetermined value T1 (95?C in this embodiment) (step S50). In a case of YES, it is determined whether the refrigerant pressure P is greater than a predetermined value P2 (137MPa in this embodiment) (step S60). A relation of P1<P2<P3 is established here.

In a case of NO in step S60, a vehicle speed value Vc detected by a vehicle speed sensor (not shown) is read (step S70) . It is then determined whether Vc is greater than a predetermined value V0 (step S80). If YES in step S80, the cooling fan 11 is not driven. This is because that if the vehicle speed is 50km/h or higher, the refrigerant is cooled by the running wind which hits the condenser 3 and the radiator 4 by running of the vehicle, and it is unnecessary to drive the cooling fan 11.

In a case of NO in step S80, it is determined whether the refrigerant pressure P is smaller than the predetermined value P1, and if YES, the cooling fan 11 is not driven (step S90) . In a case of YES in step S50 or S60, or NO in step S90, the cooling fan 11 is operative at a blowing level LOW (low blowing level). The control shown in flowcharts of Figs. 3 and 4 is repeatedly carried out after a predetermined time is elapsed irrespective of operation state of the vehicle air conditioning system 1 during driving of the vehicle.

According to the present invention, since the cooling fan 11 is operative if the refrigerant pressure P is equal to or higher than the predetermined value P1 irrespective of operation/non-operation state of the vehicle air conditioning system 1, the refrigerant is cooled, the high-pressure side refrigerant pressure of the refrigeration cycle is not increased more than a given value, and when the vehicle air conditioning system 1 is turned ON, the operation of the high pressure protecting circuit is not stopped and a large noise is not generated in the expansion valve 6.

Since the blowing level of the cooling fan 11 is adjusted in two stages (High, Low) in this embodiment in accordance with the level of the refrigerant pressure P, power can be saved.

In the embodiment, when the vehicle speed is equal to or higher than the predetermined value V0, since the increase in the refrigerant pressure is suppressed by the running wind, the cooling fan 11 is inoperative driven and thus, power can be saved. Alternatively, wind speed or wind pressure of running wind may be detected instead of the vehicle speed, and when the wind speed is equal to or higher than the predetermined value V0', the cooling fan 11 may be operative.

In some cases, even when the vehicle speed is 50km/h or lower, aerification of refrigerant in the condenser 3 is suppressed by the running wind, and even if the refrigerant pressure exceeds the predetermined value P1, it is unnecessary to drive the cooling fan 11. However, when the vehicle speed is equal to or higher than a predetermined speed Vehicle air conditioning system 1 (e.g., 20km/h) which is lower than V0, if the cooling fan 11 is operative when the refrigerant pressure is equal to or higher than a predetermined value P4 which is higher than P1, the power can further be saved.

In this embodiment, it is determined whether the high pressure side pressure P is higher than P3 (1.57MPa in this embodiment), and depending upon a result thereof, it is determined whether the cooling fan 11 should be driven at the high blowing level. Further, even if a pressure which becomes a threshold value in accordance with various conditions such as an amount of refrigerant to be charged into the refrigeration cycle and kinds of the expansion valve 6 is increased to about 2.7MPa, it is possible to prevent generation of noise. In such a case, if a frequency of operations of the cooling fan 11 is reduced, power can be saved.

### Control method immediately after actuation

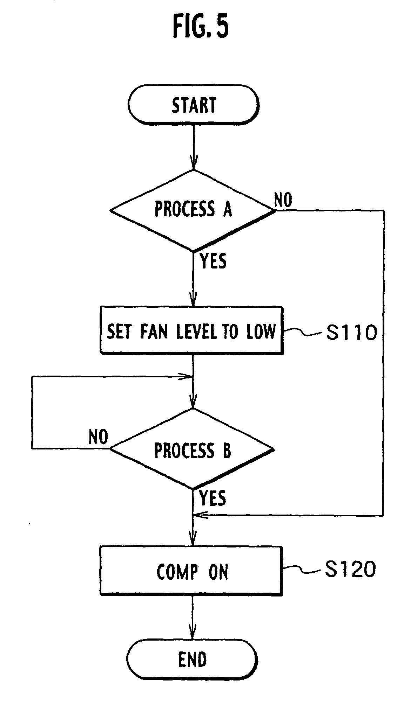

The control method immediately after the vehicle air conditioning system 1 is actuated will be explained. If the controller 41 detects that a switch of an air conditioner (not shown) is turned ON, the controller 41 controls such that the cooling fan 11 is operative at a predetermined level in accordance with the condition and then the compressor 2 is operated. This control procedure will be explained based on Figs. 5 to 11.

First, as shown in Fig. 5, if the controller 41 detects that the switch of the air conditioner (not shown) is turned ON, the procedure is proceeded to this control procedure, and a later-described process A is carried out. In the processing A, a determining condition (described below) is determined and in a case of YES, the cooling fan 11 is driven at the low blowing level (step S110), and in a case of NO, the compressor 2 is driven (step S120).

In step S110, the cooling fan 11 is driven at the low blowing level and then, a later-described process B is carried out and the compressor 2 is driven (step S120).

After the operation as described above is completed, controlling of the cooling fan 11 is performed according to the procedures as shown in Figs. 3 to 4.

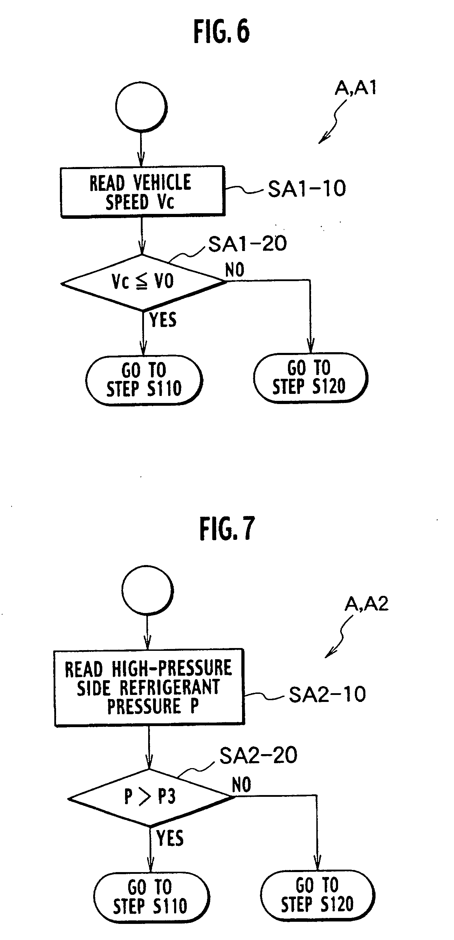

In the process A, three kinds of processes A1-A3 can be carried out as shown in Figs. 6 to 8. In a second processing A1, as shown in Fig. 6, it is determined whether the cooling fan 11 is driven in accordance with the vehicle speed. First, a value Vc of a vehicle speed sensor (not shown) is read (step SA1-10). It is then determined whether Vc is greater than a predetermined value V0 (step SA1-20). In a case of YES, the cooling fan 11 is driven at the low blowing level (step S110), and in a case of NO, the compressor 2 is driven (step S120).

In a second process A2, as shown in Fig. 7, it is determined whether the cooling fan 11 is driven in accordance with the high pressure side refrigerant pressure P. First, a value of the pressure sensor 14. i. e. , the high-pressure side refrigerant pressure P is read (step SA2-10), and it is determined whether the high-pressure side refrigerant pressure P is greater than a predetermined value P3 (1.57MPa in this embodiment) (step SA2-20). In a case of YES, the cooling fan 11 is driven at the low blowing level (step S110), and in a case of NO, the compressor 2 is driven (step S120).

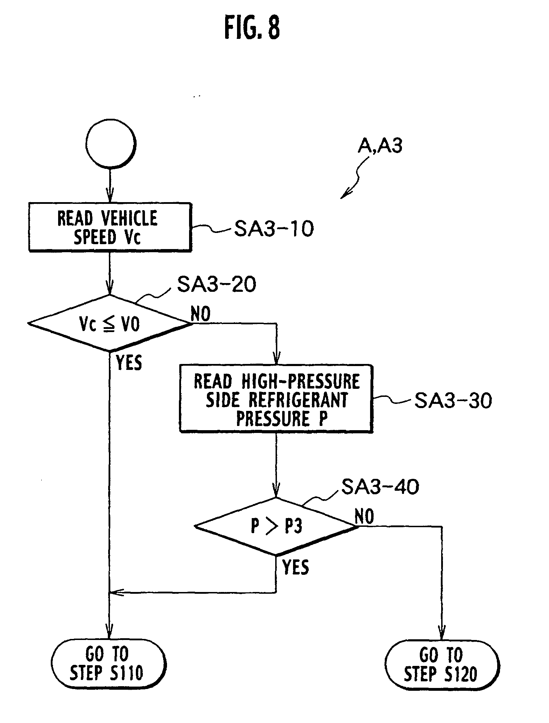

A third process A3 is equal to a combination of the first process A1 and the second process A2 as shown in Fig. 8. First, the vehicle speed Vc is read (step SA3-10), and it is determined whether the vehicle speed Vo is greater than the predetermined value V0 (step SA3-20). In a case of YES, the cooling fan 11 is driven at the predetermined low blowing level (step S110). In a case of NO, a value of the pressure sensor 14, i.e., the high-pressure side refrigerant pressure P is read (step SA3-30), and it is determined whether the high-pressure side refrigerant pressure P is greater than the predetermined value P3 (step SA3-40). In a case of YES, the cooling fan 11 is driven at the predetermined low blowing level (step S110), and in a case of NO, the compressor 2 is driven (step S120).

In this embodiment, when one of the conditions of the vehicle speed Vc and the high-pressure side refrigerant pressure P is satisfied, the cooling fan 11 becomes operative. Alternatively, it is also possible to employ such a method that if both the conditions of the vehicle speed Vo and the high-pressure side refrigerant pressure P are not satisfied, the cooling fan 11 is inoperative. Further, instead of changing the predetermined value V0 or the value P3, it is possible to change the frequency of the operation of the cooling fan 11.

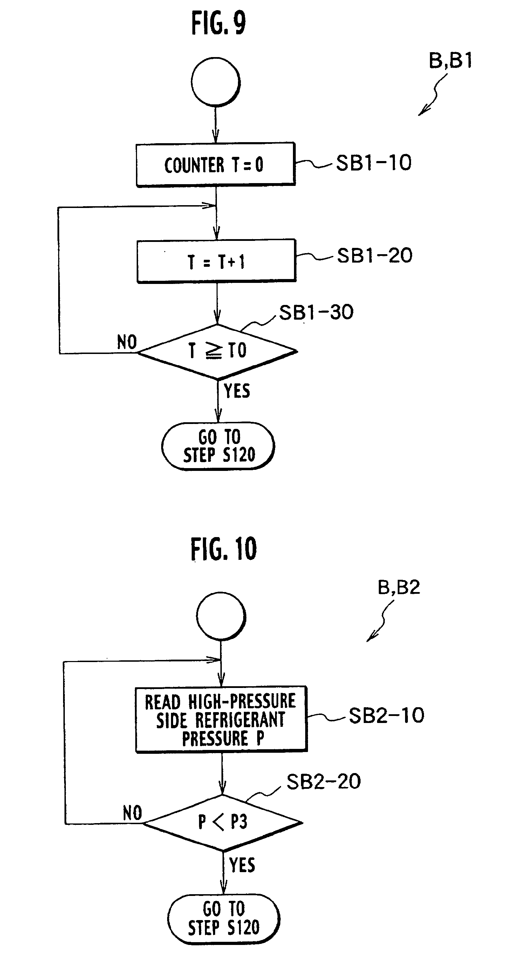

In the process B, three kinds of processes B1-B3 can be carried out as shown in Figs. 9 to 11. In a first process B1, as shown in Fig. 9, it is determined whether predetermined time is elapsed after the cooling fan 11 is driven. First, a counter T is reset (step SB1-10) and "1" is added to the counter T (step SB1-20). It is then determined whether a value of the counter T is greater than a predetermined value T0 (step SB1-30) . In a case of YES, the compressor 2 is driven (step S120), and in a case of NO, "1" is further added to the counter T in step SB1-20.

In a second process B2, as shown in Fig. 10, it is determined whether the high-pressure side refrigerant pressure P becomes lower than a predetermined pressure value. First, the high-pressure side refrigerant pressure P is read (step SB3-10), and it is determined whether the high-pressure side refrigerant pressure P is smaller than a predetermined value P3 (1.57MPa in this embodiment) (step SB2-10). In a case of YES, the compressor 2 is driven (step S120) and in a case of NO, the high-pressure side refrigerant pressure P is again read in step SB2-10.

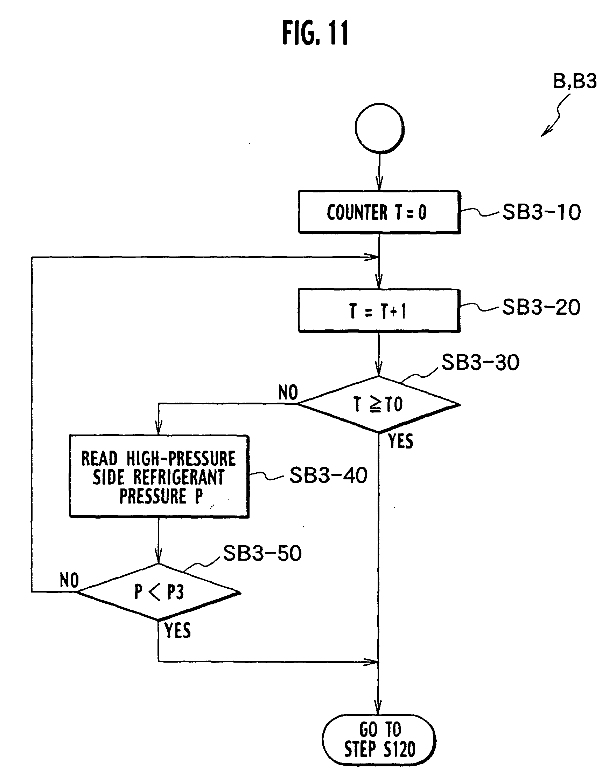

A third process B3 is a combination of the first process B1 and the second processing B2 as shown in Fig. 11. First. the counter T is reset (step SB3-10) and "1" is added to the counter T (step SB3-20). It is then determined whether the value of the counter T is greater than the predetermined value T0 (step SB3-30). In a case of YES, the compressor 2 is driven (step S120) and in a case of NO, the high-pressure side refrigerant pressure P is read (step SB3-40) and it is determined whether the high-pressure side refrigerant pressure P is smaller than the predetermined value P3 (1.57MPa in this embodiment) (step SB3-50). In a case of YES, the compressor 2 is driven (step S120) and in a case of NO, "1" is again added to the counter T in step SB3-20.

Although the compressor 2 is driven when one of conditions of the elapsed time after the actuation of the cooling fan 11 and the high-pressure side refrigerant pressure P is satisfied in this embodiment, it is also possible to employ such a method that if both the conditions of the elapsed time after the actuation of the cooling fan 11 and the high-pressure side refrigerant pressure P are not satisfied, the compressor 2 is inoperative. Instead of changing the predetermined values T0 and P3, it is possible to change the time required for driving the compressor 2 after the cooling fan 11 is operative.

When the vehicle air conditioning system 1 is turned ON, the cooling fan 11 is operative before the compressor 2 becomes operative. With this configuration, since the high-pressure side refrigerant pressure is lowered, it is possible to avoid such a case that the high pressure protecting circuit is operated and the vehicle air conditioning system 1 is stopped or a large noise is generated in the expansion valve 6 when the vehicle air conditioning system 1 is turned ON.

The control methods shown in Figs. 3 to 11 are used for controlling the cooling fan 11 which cools the multifunction type heat exchanger 100 in which the radiator 4 and the condenser 3 are disposed adjacent to each other at the distance L, but the control methods can also be used for controlling the cooling fan 11 for cooling the Integral-type multifunction-type heat exchanger as shown in Fig. 13.

The present invention can also be applied to a vehicle which is driven by a vehicle driving power source other than the engine. The invention can also be modified variously in the above embodiment within a range without departing from the spirit of the invention.

Although the invention has been described above by reference to certain embodiments of the invention, the invention is not limited to the embodiments described above. Modifications and variations of the embodiments described above will occur to those skilled in the art, in light of the teachings. The scope of the invention is defined with reference to the following claims.

## Claims

1. A controller of a cooling fan for vehicle in which the cooling fan (11) cools a radiating section (102) of a radiator (4) included in a passage (L2) of vehicle driving system cooling water and a radiating section (101) of a condenser (3) included in a refrigerant passage (L1) of a vehicle air conditioning system (1), wherein
in a case where a higher pressure side of the refrigerant passage is equal to or higher than a predetermined value (P1), the cooling fan (11) becomes operative Irrespective of operational state of the vehicle air conditioning system (1).

2. The controller according to claim 1, wherein
in a case where a vehicle speed is equal to or higher than a predetermined value (V0), the cooling fan (11) is inoperative.

3. The controller according to claim 1, wherein
in a case where a vehicle speed is equal to or higher than a predetermined value (VI), the cooling fan (11) is operative as a pressure of a higher pressure portion in the refrigerant passage (L1) is equal to a predetermined value (P4) which is higher than the predetermined value (P1).

4. The controller according to claim 1, wherein
a blowing level of the cooling fan (11) is adjusted in accordance with a level of a pressure of a higher pressure portion in the refrigerant passage.

5. The controller according to any one of claims 1-4, wherein
in a case where the vehicle air conditioning system is shifted from a stopped state to an operative state, the cooling fan becomes operative before a compressor of the vehicle air conditioning system becomes operative.

6. The controller according to claim 5, wherein
in a case where the vehicle air conditioning system is shifted from a stopped state to an operative state,
the cooling fan (11) becomes operative, and
as the operating condition of the compressor is satisfied, the compressor Included in the refrigerant passage (L1) becomes operative.

7. The controller according to claim 5, wherein
the operating condition of the cooling fan is that the cooling fan becomes operative in a case where a vehicle speed is equal to or lower than a predetermined value (V0).

8. The controller according to claim 5, wherein
the operating condition of the cooling fan is that the cooling fan is operative in a case where a pressure of the higher pressure portion of the refrigerant passage (L1) is equal to or higher than a predetermined value (P3).

9. The controller according to claim 5, wherein
the operating condition of the compressor is that the cooling fan is operative in a case where a predetermined time (T0) is elapsed after the vehicle air conditioning system is shifted from the Inoperative state to the operative state.

10. The controller according to claim 5, wherein
the operating condition of the compressor is that the cooling fan is operative in a case where a pressure of a higher pressure portion in the refrigerant passage (L1) is equal to or lower than a predetermined value (P3).

11. A control method of a vehicle cooling fan (11) in which the cooling fan (11) cools a radiating section (102) of a radiator (4) included in a passage (L2) of vehicle driving system cooling water and a radiating section (101) of a condenser (3) included in a refrigerant passage (L1) of a vehicle air conditioning system (1), comprising a step of
driving the cooling fan (11) irrespective of operational state of the vehicle air conditioning system (1) in a case where a pressure of a higher pressure portion in the refrigerant passage (L1) is equal to or higher than a predetermined value (p1).

12. The control method of the vehicle cooling fan according to claim 11, wherein
in a case where the vehicle air conditioning system is shifted from an inoperative state to an operative state, the cooling fan becomes operative before the compressor becomes operative.

13. The control method of the vehicle cooling fan according to claim 12, wherein
as the operating condition of the compressor is satisfied, the compressor constituting the refrigeration cycle becomes operative.

14. The control method of the vehicle cooling fan according to claim 12, wherein
the operating condition of the cooling fan is that the cooling fan becomes operative as a vehicle speed is equal to or lower than a predetermined value (V0).

15. The control method of the vehicle cooling fan according to claim 12, wherein
the operating condition of the cooling fan is that the cooling fan is operative in a case where a pressure of a higher pressure portion of the refrigerant passage (L1) is equal to or higher than a predetermined value (P3).

16. The control method of the vehicle cooling fan according to claim 12, wherein
the operating condition of the compressor is that the cooling fan is operative as a predetermined time (T0) is elapsed after the vehicle air conditioning system is shifted from the inoperative state to the operative state.

17. The control method of the vehicle cooling fan according to claim 12, wherein
the operating condition of the compressor is that the cooling fan is operative as a pressure of a higher pressure portion of the refrigerant passage (L1) is equal to or lower than a predetermined value (P3).
